# EUROPÄISCHE PATENTSCHRIFT

(11) **EP 2 848 462 B1**
(45) Veröffentlichungstag und Bekanntmachung des Hinweises auf die Patenterteilung: **19.07.2017**
(21) Anmeldenummer: 14171010.3
(22) Anmeldetag: 03.06.2014
(51) Int. Cl.: B60N 2/427, B60N 2/42, B60N 2/22, B60N 2/02

(54) **Schwenkflügelantrieb in Sitzlehnenverstellung**
Swivel blade drive in seat backrest adjustment
Entraînement de battant pivotant dans un réglage de dossier de siège

(43) Veröffentlichungstag der Anmeldung: 18.03.2015
(73) Patentinhaber: Metalsa Automotive GmbH, 51702 Bergneustadt (DE)
(72) Erfinder: Kern, Alexander, 51597 Morsbach (DE)
(74) Vertreter: Rebbereh, Cornelia

(56) Entgegenhaltungen:
- DE-A1-102012 019 810
- DE-T2- 60 105 351
- US-A- 5 383 623

## Beschreibung

Die Erfindung betrifft einen Sitzlehnencrashantrieb für einen Sitzlehnenversteller eines Kraftfahrzeugsitzes, mit einem mit einer Antriebswelle des Sitzlehnenverstellers in Wirkverbindung bringbaren, zwischen einer Ausganglage und einer Crashlage verstellbaren Antriebskörper, einem zwischen einer Eingriffsposition und einer Entkopplungsstellung verstellbaren Kopplungselement und einem pyrotechnischen Gasgenerator zum Antrieb des Antriebskörpers.

Kraftfahrzeugsitze, wie sie üblicherweise in Pkw, Lkw oder anderen derartigen Fahrzeugen verwendet werden, ermöglichen über einen Sitzlehnenversteller eine Einstellung der Neigung der Sitzlehne gegenüber der Sitzfläche. Die Verstellung der Sitzlehne erfolgt dabei üblicherweise über eine Antriebswelle, welche auch als Exzenterwelle ausgeführt sein kann, wobei aus einer Verdrehung der Antriebswelle eine Verstellung der Sitzlehne resultiert. Der Antrieb der Antriebswelle kann dabei in manueller Weise über ein geeignetes Drehrad oder aber durch elektrische Antriebe realisiert werden.

Die Anstellung der Sitzlehne im Kraftfahrzeug während eines Crashs hat erhebliche Auswirkungen auf die Unfallfolgen für die auf den entsprechenden Sitzen befindlichen Fahrzeuginsassen. Insbesondere bei flach gestellten Sitzen besteht die Gefahr, dass die üblicherweise vorhandenen Gurtstraffungsmittel, wie sie z.B. aus der US 5,383,623 A und der DE 601 05 351 T2 bekannt sind, nicht ihre optimale Wirkung entfalten können, so dass es unter Umständen zu einem Durchrutschen des Körpers unter dem Gurt kommen kann. Eine aufgerichtete Sitzlehne verringert hingegen, insbesondere im Zusammenwirken mit einer Gurtstraffung, die Verletzungsrisiken erheblich, da zum einen die Vorspannung des Körpers im Sitz erheblich verbessert ist und darüber hinaus im Falle eines Heckcrashs hinter den Fahrzeugsitzen ein ausreichend großer Freiraum verbleibt, der zum Abbau der Crashenergie über eine Verlagerung des Sitzes oder der Sitzlehne genutzt werden kann.

Aus der DE 10 2012 019 810 A1 ist ein Sitzlehnencrashantrieb mit den Merkmalen des Oberbegriffs vom Anspruch 1 bekannt. Bekannte im Crashfall einsetzende Sitzlehnenversteller weisen den Nachteil auf, dass sie eine zu lange Reaktionszeit aufweisen, um eine ausreichende Verlagerung der Sitzlehne zu gewährleisten. Andere Systeme, wie bspw. aktive Kopfstützen, wirken nur auf Teilbereiche des Körpers und können so z. B. kein Durchrutschen unter dem Gurt verhindern.

Der Erfindung liegt die Aufgabe zugrunde, einen Sitzlehnencrashantrieb bereitzustellen, der sich in einfacher Weise mit bekannten Sitzlehnenverstellern kombinieren lässt und im Crashfall eine nutzbare Aufstellung der Sitzlehne bewirkt.

Die Erfindung löst die Aufgabe durch einen Sitzlehnencrashantrieb mit den Merkmalen des Anspruchs 1. Vorteilhafte Weiterbildungen der Erfindung sind in den abhängigen Ansprüchen angegeben.

Der erfindungsgemäße Sitzlehnencrashantrieb, welcher sich über ein Kopplungselement formschlüssig mit der Antriebswelle eines vorhandenen Sitzlehnenverstellers verbinden lässt, weist neben dem Kopplungselement ein mit diesem in Wirkverbindung bringbaren Antriebskörper sowie einen Gasgenerator auf, der zur Verstellung des Antriebskörpers bei einer Aktivierung des Gasgenerators dient.

Kennzeichnend für den Sitzlehnencrashantrieb ist, dass der Antriebskörper, das Kopplungselement und der Gasgenerator derart ausgebildet und in Wirkverbindung befindlich sind, dass eine Aktivierung des Gasgenerators eine Verstellung des verdrehfest auf der Antriebswelle anordbaren Kopplungselement aus der von dem Antriebskörper entkoppelten Entkopplungsstellung in die das Kopplungselement und den Antriebskörper verbindenden Eingriffsstellung bewirkt und in der Eingriffsstellung eine Verlagerung des Antriebskörpers aus der Ausgangslage in die Crashlage erfolgt, die dann eine die Anstellung der Sitzlehne verbessernde Verstellung der Antriebswelle bewirkt.

Im Normalbetrieb hat der Sitzlehnencrashantrieb aufgrund der Entkopplungsstellung in der sich das Kopplungselement und der Antriebskörper außer Eingriff befinden, keinen Einfluss auf die Funktion des Sitzlehnenverstellers. Eine Verstellung der Antriebswelle durch den Sitzlehnenversteller bewirkt somit lediglich eine Verdrehung des verdrehfest auf der Antriebswelle anordbaren Kopplungselements des Sitzlehnencrashantriebs. Die Anordnung des Kopplungselements im Sitzlehnencrashantrieb in der Entkopplungsstellung ist dabei derart, dass der Sitzlehnenversteller nicht durch den Sitzlehnencrashantrieb in seiner Funktion beeinträchtigt wird.

Erst eine Aktivierung des Gasgenerators bewirkt in Folge der dabei auftretenden Druckerhöhung eine Verlagerung des Kopplungselements aus seiner Entkopplungsstellung in die Eingriffsposition, in der das Kopplungselement form- und/oder kraftschlüssig mit dem Antriebskörper verbunden ist, so dass dann eine Verlagerung des Antriebskörpers aus dessen Ausgangslage in seine Crashlage eine Verdrehung des Kopplungselements bewirkt, wodurch die Antriebswelle des Sitzlehnenverstellers entsprechend verdreht wird und eine Aufstellung der Sitzlehne erfolgt.

Der erfindungsgemäße Sitzlehnencrashantrieb weist den Vorteil auf, dass er sich in einfacher Weise über das Kopplungselement an herkömmliche Sitzlehnenversteller anschließen lässt, für die daher keine oder eine nur geringe Überarbeitung zum Anschluss des Sitzlehnencrashantriebs erforderlich ist. Im montierten Betrieb des Sitzlehnencrashantriebs an einem Sitzlehnenversteller weist der erfindungsgemäße Sitzlehnencrashantrieb ferner den Vorteil auf, dass in der Entkopplungsstellung des Kopplungselements der Sitzlehnencrashantrieb keinen Einfluss auf die Funktionsweise des Sitzlehnenverstellers ausübt, der daher in herkömmlicher Weise ohne Einschränkungen genutzt werden kann. Zudem zeichnet sich der Sitzlehnencrashantrieb durch seine besonders kompakte Bauform aus, die es ermöglicht, den Sitzlehnencrashantrieb ohne Umgestaltung der Kraftfahrzeugsitze oder des angrenzenden Bauraums an den Sitzlehnenverstellern anzuordnen.

Die Ausgestaltung des Kopplungselements derart, dass dieses zwischen der Eingriffsposition und der Entkopplungsstellung verstellbar ist und dabei in der Entkopplungsstellung von dem Antriebskörper entkoppelt und erst in der Eingriffsposition den Antriebskörper mit der Antriebswelle verbindet ist grundsätzlich frei wählbar. Die Abstützung des Gasgenerators findet dabei über die Anbindung des Sitzlehnencrashantriebs an dem Sitzlehnenversteller oder alternativ über eine Verbindung mit der Sitzstruktur statt. Ein weiterer Vorteil des erfindungsgemäßen Sitzlehnencrashantriebs besteht in seinem einfachen Aufbau, der neben einer besonders kompakten Bauweise zudem auch eine kostengünstige Herstellung erlaubt.

Damit das Kopplungselement nach einer Aktivierung des Gasgenerators eine verdrehfeste Verbindung zwischen dem Antriebskörper und der Antriebswelle des Sitzlehnenverstellers herstellt, kann es grundsätzlich in beliebiger Weise ausgestaltet sein. Auch ist die Verstellung des Kopplungselements zwischen der Eingriffsposition und der Entkopplungsstellung grundsätzlich frei wählbar. Nach einer besonders vorteilhaften Ausgestaltung der Erfindung ist jedoch vorgesehen, dass das Kopplungselement durch eine verdrehfest auf der Antriebswelle anordbare Schiebehülse gebildet ist, die derart mit dem Gasgenerator in Wirkverbindung befindlich ist, dass dessen Aktivierung eine axiale Verschiebung der Schiebehülse aus der Entkopplungsstellung in die Eingriffsstellung bewirkt.

Gemäß dieser Ausgestaltung der Erfindung ist eine axiale Verschiebung der Schiebehülse vorgesehen, um diese zwischen der im nicht aktivierten Betrieb des Sitzlehnencrashantriebs bestehenden Entkopplungsstellung in die bei einer Aktivierung des Sitzlehnencrashantriebs erforderliche Eingriffsstellung zu verlagern. Die Schiebehülse zeichnet sich dabei dadurch aus, dass sie zum einen eine einfache verdrehfeste Verbindung mit der Antriebswelle ermöglicht und gleichzeitig im Aktivierungsfall in einfacher Weise in die Eingriffsstellung verlagerbar ist. Auf eine separate Führung zur Verlagerung des Kopplungselements kann bei der Ausgestaltung des Kopplungselements als Schiebehülse verzichtet werden, nachdem die Antriebswelle hierbei als Führungselement wirkt. Die Ausgestaltung des Kopplungselements als Schiebehülse zeichnet sich durch eine hohe Funktionssicherheit und gleichzeitig kostengünstige Herstellungsmöglichkeit aus.

Die Ausgestaltung des Sitzlehnencrashantriebs derart, dass eine Aktivierung des Gasgenerators eine Verschiebung der Schiebehülse bewirkt kann dabei grundsätzlich frei gewählt werden. Nach einer besonders vorteilhaften Weiterbildung der Erfindung ist jedoch vorgesehen, dass die Schiebehülse mit einem Hubkolben verbunden ist, der derart mit dem Gasgenerator in Wirkverbindung befindlich ist, dass der bei einer Aktivierung des Gasgenerators auftretende Gasdruck eine axiale Verlagerung des Hubkolbens bewirkt.

Gemäß dieser Ausgestaltung der Erfindung wirkt der bei einer Aktivierung des Gasgenerators auftretende Gasdruck durch eine entsprechende Ausgestaltung des Sitzlehnencrashantriebs auf den Hubkolben und verschiebt diesen, so dass aufgrund der Verbindung des Hubkolbens mit der Schiebehülse eine Verlagerung der Schiebehülse aus der Entkoppelungsstellung in die Eingriffsposition erfolgt. Die Verwendung eines Hubkolbens weist dabei den Vorteil auf, dass dieser unabhängig von der Schiebehülse ausgestaltet und im Sitzlehnencrashantrieb an geeigneter Stelle positioniert werden kann, so dass eine optimale Anpassung an den Gasgenerator und die sich bei einer Aktivierung des Gasgenerators einstellende Druckerhöhung erfolgen kann. Die Schiebehülse kann somit unabhängig von dem Hubkolben ausgestaltet sein, so dass der Fokus bei der Ausgestaltung der Schiebehülse auf die Kopplungseigenschaften gerichtet werden kann. Besonders vorteilhafterweise ist dabei der Hubkolben ebenfalls verschiebbar auf der Antriebswelle anordbar, so dass keine weiteren Führungselemente für den Hubkolben erforderlich sind.

Die Verbindung zwischen dem Kopplungselement und dem Antriebskörper in der Eingriffsposition des Kopplungselements kann grundsätzlich in beliebiger Weise realisiert werden. Denkbar ist bspw. eine kraftschlüssige Verbindung über geeignete Lamellen. Nach einer besonders vorteilhaften Ausgestaltung ist jedoch vorgesehen, dass der Antriebskörper und das Kopplungselement korrespondierende Verzahnungen aufweisen, die in der Eingriffsstellung in Wirkverbindung befindlich sind. In der Entkopplungsstellung hingegen befinden sich die Verzahnungen außer Eingriff, so dass das auf der Antriebswelle montierte Kopplungselement des Sitzlehnencrashantriebs keinen Einfluss auf die Funktionsweise des Sitzlehnenverstellers ausübt. Die Verzahnungen, insbesondere eine in Längsachsenrichtung betrachtet, stirnseitig gegenüberliegende Verzahnung von Schiebehülse und Antriebskörper stellt eine besonderes zuverlässige Kopplungsmöglichkeit dar, welche zudem einen nur geringen Bauraum beansprucht und sich kostengünstig herstellen lässt. Auch ist eine Entkopplung nach einer Aktivierung des Gasgenerators in einfacher Weise durch eine entgegengesetzt gerichtete Verstellung des Antriebskörpers in die Entkopplungsstellung möglich.

Eine solche Verstellung des Kopplungselements in die Entkopplungsstellung kann grundsätzlich in manueller Weise erfolgen. Nach einer besonders vorteilhaften Ausgestaltung der Erfindung ist jedoch vorgesehen, dass das Kopplungselement in Richtung auf die Entkopplungsstellung vorgespannt ist, bspw. durch eine Schraubendruckfeder. Die Vorspannung des Kopplungselements in Richtung auf die Entkopplungsstellung weist den Vorteil auf, dass im Normalbetrieb, bei dem der Sitzlehnencrashantrieb an einem Sitzlehnenversteller montiert ist, das Kopplungselement in zuverlässiger Weise in der Entkopplungsstellung verbleibt und dort keinen Einfluss auf den Sitzlehnenversteller ausübt. Zudem kann durch die Vorspannung erreicht werden, dass das Kopplungselement nach einem Druckabfall im Druckraum wieder selbsttätig in die Entkopplungsstellung gelangt, so dass dann der Sitzlehnenversteller wieder in seiner ursprünglichen Weise genutzt werden kann. Im Falle von Fehlauslösungen, die aufgrund der lediglich erfolgenden Bewegung in dem gekapselten Sitzlehnencrashantrieb keinerlei Gefährdungspotential für die Insassen besitzt, kann durch einen einfachen Austausch des Gasgenerators der Sitzlehnencrashantrieb wieder in Funktion genommen werden.

Die Ausgestaltung des Antriebskörpers kann grundsätzlich in beliebiger Weise erfolgen. Nach einer besonders vorteilhaften Ausgestaltung der Erfindung ist jedoch vorgesehen, dass der Antriebskörper durch einen Schwenkflügel gebildet ist, der im Bereich eines Druckraums eines Gehäuses abdichtend, vorzugsweise durch eine Dichtauflage, an einer Gehäuseinnenwand anliegt, wobei der Schwenkflügel bei einer Aktivierung des Gasgenerators in Umfangsrichtung der Antriebswelle verschwenkt wird. Die Ausgestaltung des Antriebskörpers als Schwenkflügel weist eine hohe Funktionssicherheit auf. Der Schwenkflügel wird auf einer Seite im Falle einer Aktivierung des Gasgenerators mit Druck beaufschlagt und in Folge dessen um die Antriebswelle verschwenkt. Aufgrund der sich nach einer Aktivierung des Gasgenerators einstellenden Eingriffsposition zwischen dem Kopplungselement verdreht somit der Schwenkflügel die Antriebswelle um einen zuvor festgelegten Winkelbetrag. Über die Ausgestaltung des Schwenkflügels und die von der Druckerhöhung beaufschlagte Fläche kann dabei in einfacher Weise das vom Schwenkflügel aufgebrachte Drehmoment festgelegt werden. Die Verwendung eines Schwenkflügels als Antriebskörper zeichnet sich dabei auch dadurch aus, dass dieser eine einfache Umwandlung der Druckenergie in eine Rotationsbewegung der Antriebswelle ermöglicht.

Im Falle der Verwendung einer vorzugsweise vorgesehenen Dichtauflage zur abdichtenden Anordnung des Schwenkflügels an der Gehäuseinnenwand ist diese bevorzugt derart ausgebildet, dass diese die durch den Innendruck des Gehäuses hervorgerufene Deformation der Gehäusewände ausgleichen kann, so dass eine hohe Funktionssicherheit gewährleistet ist. Die Dichtauflage ist dabei bevorzugt auf der Seite des Schwenkflügels angeordnet, die im Falle einer Aktivierung des Gasgenerators von der sich einstellenden Druckerhöhung belastet ist.

Eine für die Funktion des Schwenkflügels erforderliche Verlagerung des Kopplungselements in die Eingriffsposition bei einer Aktivierung des Gasgenerators kann ebenfalls grundsätzlich in beliebiger Weise erfolgen. Nach einer besonders vorteilhaften Ausgestaltung der Erfindung ist jedoch vorgesehen, dass der Schwenkflügel eine den Druckraum und den Hubkolben verbindende Drucköffnung aufweist. Durch die Verwendung einer Drucköffnung im Schwenkflügel wird gewährleistet, dass die im Falle einer Auslösung des Gasgenerators auftretende Druckerhöhung im Druckraum unmittelbar über die Drucköffnung auch auf den Hubkolben wirkt, welcher dann aufgrund der bestehenden Verbindung mit dem Kopplungselement, die Verlagerung in die Eingriffsposition gewährleistet. Auf zusätzliche Gasleitungselemente kann bei einer entsprechenden Ausgestaltung des Schwenkflügels somit verzichtet werden, so dass eine besonders kompakte Bauform des Sitzlehnencrashantriebs gewährleistet werden kann.

Nach einer vorteilhaften Ausgestaltung der Erfindung ist ferner vorgesehen, dass der Gasgenerator über ein Abdichtelement mit einer Einströmöffnung mit dem Druckraum verbunden ist. Grundsätzlich gelangt das bei einer Aktivierung des Gasgenerators ausströmende Gas über geeignete Kanäle in den Druckraum. Die Verwendung eines Abdichtelements mit einer Einströmöffnung erlaubt es, unabhängig von der Ausgestaltung der Kanäle über eine einfache Festlegung der Einströmöffnung die Geschwindigkeits-/Momentenkurve des Sitzlehnencrashantriebs anwendungsspezifisch einzustellen. Das Abdichtelement kann dabei durch ein Kunststoffbauteil gebildet sein, welches auch zur Abdichtung zwischen dem Druckrohr und dem Gehäuse des Sitzlehnencrashantriebs dienen kann.

Ein Ausführungsbeispiel der Erfindung wird nachstehend mit Bezug auf die Zeichnungen dargestellt. In den Zeichnungen zeigen:
- Fig. 1: eine perspektivische Ansicht eines Sitzlehnencrashantriebs an einem nicht zur Erfindung gehörenden motorisch angetriebenen Sitzlehnenversteller;
- Fig. 2: eine Schnittansicht durch den Sitzlehnencrashantrieb von Fig. 1 in Verbindung mit dem nicht zur Erfindung gehörenden Sitzlehnenversteller und
- Fig. 3: eine weitere Schnittansicht durch den Sitzlehnencrashantrieb von Fig. 1.

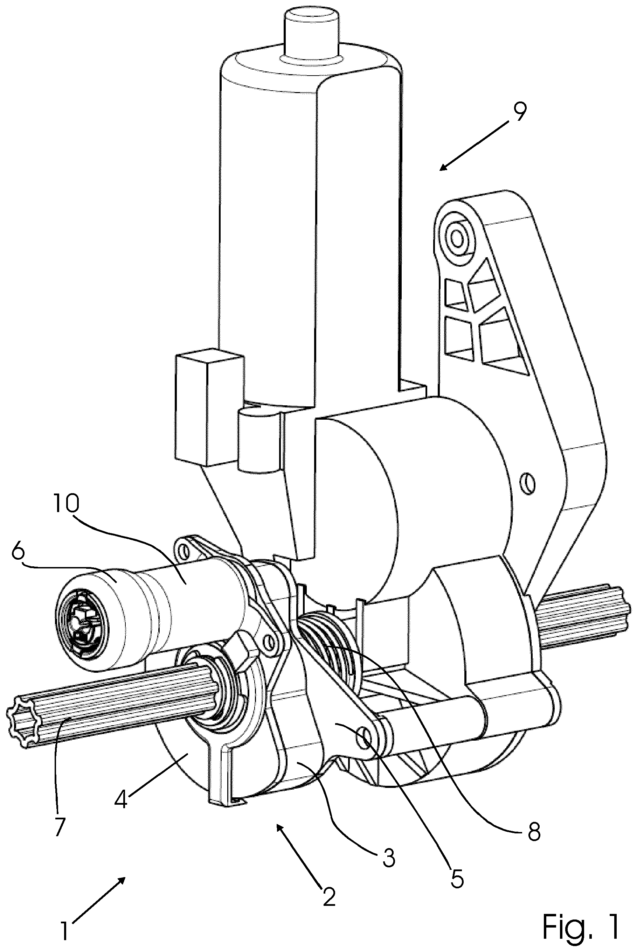

In Figur 1 ist ein Sitzlehnencrashantrieb 1 in einer an einem nicht zur Erfindung gehörenden Sitzlehnenversteller 9 montierten Lage dargestellt. Der Sitzlehnenversteller 9 ist motorisch angetrieben und weist zur Verstellung einer hier nicht dargestellten Sitzlehne eine Antriebswelle 7 auf. Der Sitzlehnencrashantrieb 1 ist an der Antriebswelle 7 angeordnet und über einen Anschlusskörper 5 ortsfest an einem Gehäuse des Sitzlehnenverstellers 9 befestigt.

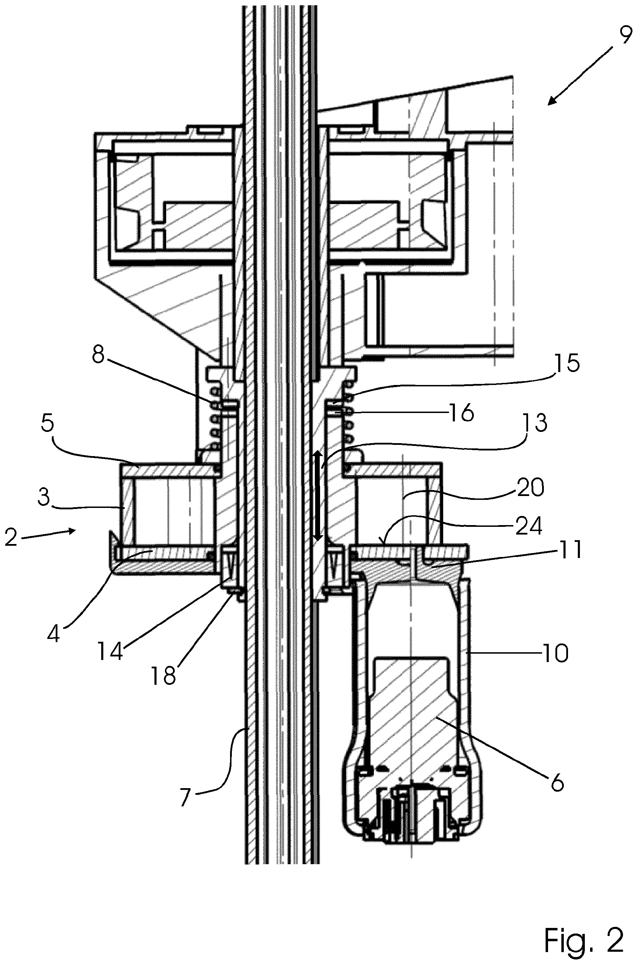

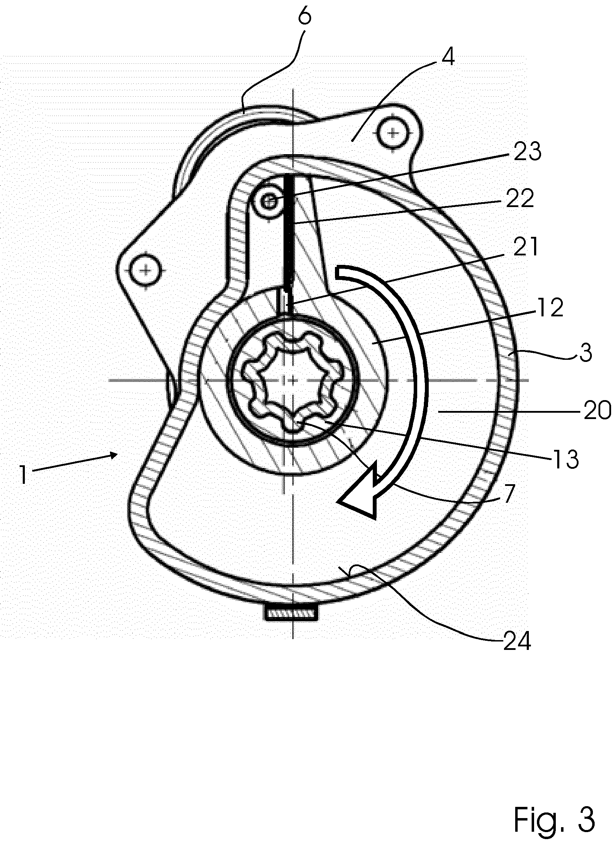

Der Sitzlehnecrashantrieb 1 weist einen Gasgenerator 6 auf, welcher über ein Druckrohr 10 an einem Gehäusedeckel 4 des Gehäuses 2 des Sitzlehnencrashantriebs 1 befestigt ist. Der Gehäusedeckel 4 verschließt dabei einerseits einen Gehäusegrundkörper 3, welcher andererseits durch den Anschlusskörper 5 verschlossen ist, welcher auch zur ortsfesten Verbindung des Sitzlehnencrashantriebs 1 mit dem Sitzlehnenversteller 9 dient (vgl. Fig. 2 und Fig. 3).

Der Gehäusedeckel 4, der Gehäusegrundkörper 3 sowie der Anschlusskörper 5 grenzen einen Druckraum 20 ab, welcher über eine Einströmöffnung 23 mit dem Druckrohr 10 des Gasgenerators 6 verbunden ist. Eine Aktivierung des Gasgenerators 6 bewirkt somit eine nutzbare Druckerhöhung in dem Druckraum 20, die zu einer Verlagerung eines als Schwenkflügel 12 ausgebildeten Kopplungselements genutzt werden kann.

Der Schwenkflügel 12 ist koaxial zu einer Schiebehülse 13 des Sitzlehnencrashantriebs 1 angeordnet, die ihrerseits verdrehfest auf der Antriebswelle 7 angeordnet ist. In der in Figur 2 dargestellten Entkopplungsstellung der Schiebehülse 13 befindet sich diese in einer von dem Schwenkflügel 12 entkoppelten Stellung, in der die Schiebehülse 13 frei gegenüber dem Schwenkflügel 12 verdreht werden kann. Zur Übertragung einer Drehbewegung des Schwenkflügels 12 auf die Schiebehülse 13 ist eine axiale Verlagerung der Schiebehülse 13 erforderlich, bei der die in axialer Richtung der Antriebswelle 7 betrachtet stirnseitig gegenüberliegend angeordneten Verzahnungen 15, 16 der Schiebehülse 13 und des Schwenkflügels 12 in Eingriff gelangen.

Eine Verschiebung der Schiebehülse 13 in die hier nicht dargestellte Eingriffsposition wird dabei über einen Hubkolben 14 bewirkt, welcher an einem in die Schiebehülse 13 eingreifenden Sicherungsring 18 anliegt. Eine Aktivierung des Gasgenerators 6 bewirkt eine Druckerhöhung innerhalb des Druckraums 20. Aufgrund einer zwischen dem Druckraum 20 und dem Hubkolben 14 bestehenden Verbindung über eine Drucköffnung 21 wirkt die Druckerhöhung derart auf den Hubkolben 14, dass dieser axial entlang der Antriebswelle 7 verschoben wird und dabei die Schiebehülse 13 in Richtung auf den Schwenkflügel 12 in die Eingriffsstellung verschiebt.

Die Verstellung erfolgt dabei entgegen einer durch eine Schraubendruckfeder 8 erzeugten Vorspannung, wobei die Schraubendruckfeder 8 einenends an dem Sitzlehnenversteller 9 und anderenends an dem Sitzlehnencrashantrieb 1 abgestützt ist. Um eine sichere Verschwenkung durch die Ausnutzung der Druckerhöhung zu erzielen, ist auf der der Einströmöffnung 23 zugewandten Seite des Schwenkflügels 12 eine Dichtauflage 22 angeordnet, mit der der Schwenkflügel 12 gegenüber der Gehäuseinnenwand 24 abgedichtet ist.

### Bezugszeichenliste

- 1: Sitzlehnencrashantrieb
- 2: Gehäuse
- 3: Gehäusegrundkörper
- 4: Gehäusedeckel
- 5: Anschlusskörper
- 6: Gasgenerator
- 7: Antriebswelle
- 8: Schraubendruckfeder
- 9: Sitzlehnenversteller
- 10: Druckrohr
- 11: Abdichtelement
- 12: Schwenkflügel / Antriebskörper
- 13: Schiebehülse / Kopplungselement
- 14: Hubkolben
- 15: Verzahnung Schiebehülse
- 16: Verzahnung Schwenkflügel
- 18: Sicherungsring
- 19: Einströmöffnung
- 20: Druckraum
- 21: Drucköffnung
- 22: Dichtauflage
- 23: Einströmöffnung
- 24: Gehäuseinnenwand

## Patentansprüche

1. Sitzlehnencrashantrieb für einen Sitzlehnenversteller eines Kraftfahrzeugsitzes, mit
- einem mit einer Antriebswelle (7) des Sitzlehnenverstellers (9) in Wirkverbindung bringbaren, zwischen einer Ausgangslage und einer Crashlage verstellbaren Antriebskörper (12),
- einem zwischen einer Eingriffsposition und einer Entkopplungsstellung verstellbaren Kopplungselement (13) und
- einem pyrotechnischen Gasgenerator (6) zum Antrieb des Antriebkörpers (12), **dadurch gekennzeichnet, dass** derAntriebskörper (12), das Kopplungselement (13) und der Gasgenerator (6) derart ausgebildet und in Wirkverbindung befindlich sind, dass eine Aktivierung des Gasgenerators (6) eine Verstellung des verdrehfest auf der Antriebswelle (7) anordbaren Kopplungselements (13) aus der von dem Antriebskörper (12) entkoppelten Entkopplungsstellung in die das Kopplungselement (13) und den Antriebskörper (12) verbindende Eingriffsstellung bewirkt und in der Eingriffsstellung eine Verlagerung des Antriebskörpers (12) aus der Ausgangslage in die Crashlage erfolgt.

2. Sitzlehnencrashantrieb nach Anspruch 1, **dadurch gekennzeichnet, dass** das Kopplungselement durch eine verdrehfest auf der Antriebswelle (7) anordbare Schiebehülse (13) gebildet ist, die derart mit dem Gasgenerator (6) in Wirkverbindung befindlich ist, dass dessen Aktivierung eine axiale Verschiebung der Schiebehülse (13) aus der Entkopplungsstellung in die Eingriffsstellung bewirkt.

3. Sitzlehnencrashantrieb nach Anspruch 2, **dadurch gekennzeichnet, dass** die Schiebehülse (13) mit einem Hubkolben (14) verbunden ist, der derart mit dem Gasgenerator (6) in Wirkverbindung befindlich ist, dass der bei einer Aktivierung des Gasgenerator (6) auftretende Gasdruck eine axiale Verlagerung des Hubkolbens (14) bewirkt.

4. Sitzlehnencrashantrieb nach einem der vorhergehenden Ansprüche, **dadurch gekennzeichnet, dass** der Antriebskörper (12) und das Kopplungselement (13) korrespondierende Verzahnungen (15, 16) aufweisen, die in der Eingriffsstellung in Wirkverbindung befindlich sind.

5. Sitzlehnencrashantrieb nach einem der vorhergehenden Ansprüche, **dadurch gekennzeichnet, dass** das Kopplungselement (13) in Richtung auf die Entkopplungsstellung vorgespannt ist.

6. Sitzlehnencrashantrieb nach einem der vorhergehenden Ansprüche, **dadurch gekennzeichnet, dass** der Antriebskörper durch einen Schwenkflügel (12) gebildet ist, der im Bereich eines Druckraums (20) eines Gehäuses (2) abdichtend, vorzugsweise durch eine Dichtauflage (22), an einer Gehäuseinnenwand (24) anliegt, wobei der Schwenkflügel (12) bei einer Aktivierung des Gasgenerators (6) in Umfangsrichtung der Antriebswelle (7) verschwenkt wird.

7. Sitzlehnencrashantrieb nach Anspruch 3 und 6, **dadurch gekennzeichnet, dass** der Schwenkflügel (12) eine den Druckraum (20) und den Hubkolben (14) verbindende Drucköffnung (21) aufweist.

8. Sitzlehnencrashantrieb nach Anspruch 6 oder 7, **dadurch gekennzeichnet, dass** der Gasgenerator (6) über ein Abdichtelement (11) mit einer Einströmöffnung (19) mit dem Druckraum (20) verbunden ist.

## Claims

1. Seat backrest crash drive for a seat backrest adjuster of a motor vehicle seat, having
- a drive body (12) operatively connectable to a drive shaft (7) of the seat backrest adjuster (9) and adjustable between a starting position and a crash position,
- a coupling element (13) adjustable between an engagement position and a decoupling position and
- a pyrotechnic gas generator (6) for driving the drive body (12),
**characterised in that** the drive body (12), the coupling element (13) and the gas generator (6) are formed and operatively connected in such a way that an activation of the gas generator (6) causes an adjustment of the coupling element (13), arrangeable rotationally fixedly on the drive shaft (7), from the decoupling position, decoupled from the drive body (12), into the engagement position connecting the coupling element (13) and the drive body (12), and in the engagement position a displacement of the drive body (12) from the starting position into the crash position takes place.

2. Seat backrest crash drive according to Claim 1, **characterised in that** the coupling element is formed by a sliding sleeve (13) which is arrangeable rotationally fixedly on the drive shaft (7) and which is operatively connected to the gas generator (6) in such a way that the activation of the gas generator (6) causes an axial displacement of the sliding sleeve (13) from the decoupling position into the engagement position.

3. Seat backrest crash drive according to Claim 2, **characterised in that** the sliding sleeve (13) is connected to a reciprocating piston (14) which is operatively connected to the gas generator (6) in such a way that the gas pressure occurring upon an activation of the gas generator (6) causes an axial displacement of the reciprocating piston (14).

4. Seat backrest crash drive according to one of the preceding claims, **characterised in that** the drive body (12) and the coupling element (13) have corresponding toothings (15, 16) which are operatively connected in the engagement position.

5. Seat backrest crash drive according to one of the preceding claims, **characterised in that** the coupling element (13) is biased in the direction of the decoupling position.

6. Seat backrest crash drive according to one of the preceding claims, **characterised in that** the drive body is formed by a pivoting wing (12) which, in the region of a pressure chamber (20) of a housing (2), bears sealingly against a housing inner wall (24), preferably by means of a sealing layer (22), the pivoting wing (12) being pivoted in a circumferential direction of the drive shaft (7) upon an activation of the gas generator (6).

7. Seat backrest crash drive according to Claim 3 and 6, **characterised in that** the pivoting wing (12) has a pressure opening (21) connecting the pressure chamber (20) and the reciprocating piston (14).

8. Seat backrest crash drive according to Claim 6 or 7, **characterised in that** the gas generator (6) is connected to the pressure chamber (20) via a sealing element (11) with an inflow opening (19).

## Revendications

1. Entraînement de blocage de dossier de siège pour un élément de réglage de dossier de siège d'un siège de véhicule automobile, avec
- un corps d'entraînement (12) pouvant être amené en liaison active avec un arbre d'entraînement (7) de l'élément de réglage de dossier de siège (9), réglable entre une position de départ et une position de blocage,
- un élément de couplage (13) réglable entre une position de mise en prise et une position de découplage et
- un générateur de gaz (6) pyrotechnique pour l'entraînement du corps d'entraînement (12), **caractérisé en ce que**
le corps d'entraînement (12), l'élément de couplage (13) et le générateur de gaz (6) sont réalisés et se trouvent en liaison active de telle manière qu'une activation du générateur de gaz (6) provoque un réglage de l'élément de couplage (13) pouvant être agencé sans pouvoir tourner sur l'arbre d'entraînement (7) de la position de découplage découplée du corps d'entraînement (12) à la position de mise en prise reliant l'élément de couplage (13) et le corps d'entraînement (12) et un déplacement du corps d'entraînement (12) hors de la position de départ à la position de blocage est effectué dans la position de mise en prise.

2. Entraînement de blocage de dossier de siège selon la revendication 1, **caractérisé en ce que** l'élément de couplage est formé par une douille coulissante (13) pouvant être agencée sans pouvoir tourner sur l'arbre d'entraînement (7), qui se trouve en liaison active avec le générateur de gaz (6) de telle manière que son activation provoque un déplacement axial de la douille coulissante (13) de la position de découplage à la position de mise en prise.

3. Entraînement de blocage de dossier de siège selon la revendication 2, **caractérisé en ce que** la douille coulissante (13) est reliée à un piston de levage (14) qui se trouve en liaison active avec le générateur de gaz (6) de telle manière que la pression de gaz apparaissant lors d'une activation du générateur de gaz (6) provoque un déplacement axial du piston de levage (14).

4. Entraînement de blocage de dossier de siège selon l'une des revendications précédentes, **caractérisé en ce que** le corps d'entraînement (12) et l'élément de couplage (13) présentent des dentures correspondantes (15, 16) qui se trouvent en liaison active dans la position de mise en prise.

5. Entraînement de blocage de dossier de siège selon l'une des revendications précédentes, **caractérisé en ce que** l'élément de couplage (13) est précontraint en direction de la position de découplage.

6. Entraînement de blocage de dossier de siège selon l'une des revendications précédentes, **caractérisé en ce que** le corps d'entraînement est formé par un battant pivotant (12) qui repose dans la zone d'un espace de pression (20) d'un boîtier (2) de manière étanche, de préférence par un appui étanche (22) contre une paroi intérieure de boîtier (24), dans lequel le battant pivotant (12) est pivoté lors d'une activation du générateur de gaz (6) dans le sens périphérique de l'arbre d'entraînement (7).

7. Entraînement de blocage de dossier de siège selon les revendications 3 et 6, **caractérisé en ce que** le battant pivotant (12) présente une ouverture de pression (21) reliant l'espace de pression (20) et le piston de levage (14).

8. Entraînement de blocage de dossier de siège selon la revendication 6 ou 7, **caractérisé en ce que** le générateur de gaz (6) est relié par le biais d'un élément étanche (11) à une ouverture d'afflux (19) avec l'espace de pression (20).
